# EUROPEAN PATENT APPLICATION

(11) **EP 1 035 722 A1**
(43) Date of publication of application: **13.09.2000**
(21) Application number: 00301531.0
(22) Date of filing: 28.02.2000
(51) Int. Cl.: H04M 11/06, H04L 29/06

(54) **Dynamic configuration of communications devices for varying DSL protocols**

(30) Priority: 10.03.1999 US 265737
(71) Applicant: LUCENT TECHNOLOGIES INC., Murray Hill, New Jersey 07974-0636 (US)
(72) Inventor: Aravamudan, Murali, Murray Hill, New Jersey 07974 (US); Szurkowski, Edward Stanley, Maplewood, New Jersey 07040 (US)
(74) Representative: Watts, Christopher Malcolm Kelway, Dr.

(57) **Abstract**

A method and apparatus for dynamically configuring communications devices using a variety of different communications protocols without user intervention. More particularly, the dynamic configuration of a communications device is facilitated by a real-time determination as to which link layer protocol is currently deployed across the communications channel. Once an indication of the link layer protocol has been received the particular communications device is automatically configured with a correct set of protocols. Advantageously, communications devices are dynamically configured with variably changing protocols without user intervention.

## Description

### Field of the Invention

The present invention relates to communications networks and, more particularly, to configuring communications devices for exchanging signals across such communications networks.

### Background of the Invention

Advances in communications technology and the availability of powerful desktop computer hardware has increased the use of computers to access a variety of publicly available computer networks. For example, the speed of modems, well-known communication devices used for transforming a digital bit stream into an analog signal, has significantly increased thereby allowing for the high-speed exchange of information across communications networks, e.g., the public switched telephone network ("PSTN".) Today, a tremendous amount of information is exchanged between individual users located around the world via public communications networks, e.g., PSTN's and the Internet. In addition to the increased volume of communications traffic across PSTN's, there is a dual increase in the content features of today's applications which are available across communications networks. These content rich applications require high bandwidth and high-speed communication transmissions between the provider and the user of the application. Such high-speed communications have placed a significant burden on modern-day PSTN's and the entire telephony infrastructure. More particularly, the well-known local loop, i.e., the connection from the subscriber to the local central office of a local exchange company ("LEC"), has become a main focus and bottleneck for telephone service providers in meeting the ever-increasing communications demands of their subscriber base. A significant challenge to the local service providers is that the conventional local loop infrastructure comprises standard copper cable, i.e., copper loops, which cannot readily support high bandwidth transmission requirements.

Therefore, telecommunications service providers, e.g. LEC's or inter-change carriers ("IXC"), are exploring a number of techniques for increasing the bandwidth capacity of their existing copper loop network infrastructure. One emerging technology which enables high-speed digital data transmission over standard copper loops is so-called Digital Subscriber Line ("DSL") communications. In short, DSL provides for the transmission of high bandwidth capacities between service providers and their subscribers using the existing copper local loop infrastructure. More particularly, DSL is a modem-like technology requiring a DSL configured communications device at the transmission and receiving location for exchanging a high-speed analog signal which has been overlayed with a digital data stream. In this way, DSL provides for the simultaneous transmission of voice, data, video, and multimedia over the existing telephone network infrastructure. DSL and its potential applications are described in more detail, e.g., by D. L. Waring et al., Digital Subscriber Line Technology Facilitates a Graceful Transition From Copper to Fiber, *IEEE Communications Magazine*, March, 1991, which is hereby incorporated by reference for all purposes.

Advantageously, DSL supports both symmetric and asymmetric bandwidth configurations. As is well-known, symmetric bandwidth applications are those in which the provided channel bandwidth is the same in both directions, e.g., conventional Plain Old Telephone Service ("POTS".) Conversely, asymmetric bandwidth applications are those in which a higher bandwidth is transmitted in one direction (e.g., from the central office to the subscriber) than in the other direction. For example, so-called Asymmetric Digital Subscriber Line ("ADSL") has emerged as a leading technology for addressing the current explosion in Internet access subscriptions. ADSL is ideal for Internet access because the nature of the communication, in terms of bandwidth, is inherently asymmetric. For example, when subscribers browse the well-known World Wide Web ("WWW") their upstream connection to the WWW requires low bandwidth to facilitate the exchange. However, the downstream transmission from the WWW to the subscriber requires a much higher bandwidth for exchanging the desired content, e.g. multimedia, from the WWW.

Thus, DSL is an emerging communications technology which will become more pervasive throughout the communications industry and network infrastructure. However, as with most emerging technologies, the expected deployment of DSL (and DSL configured communications devices) throughout communications networks raises a number of operational issues. One such issue is the optimal selection of a so-called link layer protocol (as is well-known the link layer is the so-called "layer 2" of the well-known ISO seven layer reference model for protocol software) to be used with DSL communications for providing high-speed data services over existing copper loops to residential customers. In particular, this issue centers around the selection and use of well-known communications protocols such as the Point-to-Point ("PPP") protocol, the Asynchronous Transfer Mode ("ATM") protocol, or the High Level Data Link Control ("HDLC"), as the actual link layer protocol used to transmit data packets, e.g., IP packets, between central offices and customer premises over DSL configured channels. From a technological standpoint, the debate of whether to use PPP, ATM, HDLC, or similar protocols, in conjunction with DSL configured channels includes issues such as the number of supported services. In particular, a widely held belief by numerous service providers is that ATM will be better able to support a broader array of services than other protocols, e.g., PPP. Such support for ATM stems from the need to satisfy various requirements related to quality of service assurances placed on and by the service providers. ATM is useful in meeting such quality of service assurances due to its transport mechanism which consists of a stream of fixed-length cells which inherently bound the latency that a high priority cell would have to wait behind an in-progress lower-priority cell. In contrast, PPP in standard form, transports long, variable-length packets, that cannot be interrupted. For example, using PPP, a short (e.g., 64 byte) high-priority voice packet may have to wait while a larger (e.g., 1000 byte) packet from a file transfer completes transmission. Of course, support for PPP, stems from its relatively low overhead and features which make PPP a better protocol match for packet-oriented networks. Therefore, given such a debate between the deployment of a variety of protocols, it is likely that communications systems will be deployed with each of the protocols in different geographic areas, or in the same area, by competing DSL communications service providers.

Of course, deployment of a wide number of DSL communications systems having disparate link layer protocols, e.g., PPP, ATM, or HDLC, will create certain additional operational issues with regard to the communications devices e.g., customer premise equipment ("CPE"), used to exchange communications across the networks. In particular, it is most likely that CPE compatible with one of these protocols will not operate on DSL communications systems that use the other protocols due to the complexity of a dual protocol communications device. That is, there currently exist any number of combinations between modulation alternatives (e.g., ADSL, ADSL-lite, RADSL, HDSL, SDSL, etc.) and speeds, compounded by several different framing alternatives (ATM, HDLC, PPP, etc.) which potentially could execute on most of these underlying modulation schemes. However, there presently exists no definitive agreement or industry standard amongst service providers regarding a single type of DSL to deploy to their customers. Therefore, CPE manufacturers have at least two deployment choices: (1) manufacture two different types of devices, i.e., one device per protocol; or (2) manufacture devices that the end user can manually configure during installation of the device for one particular protocol. Each choice comes with certain disadvantages to both supplier and customer.

For example, offering different versions of CPE communications devices increases costs and creates inventory and/or distribution problems for the manufacturer. Further, the user is prevented from selecting a new communications service provider that uses a different protocol without purchasing new equipment which is compatible with that particular protocol. On the other hand, offering manually configurable CPE devices requires the user to know which protocol is being used by a particular service provider and having the ability to perform the requisite configuration of the device for that protocol. As will be appreciated, communications systems requiring user configuration, e.g., well-known ISDN systems, have been shown to be error-prone, having increased user frustration, and having increased customer support costs.

Therefore, a need exists for a technique for dynamically configuring communications devices, e.g., DSL devices, for use with a variety of different communications protocols across various communications networks.

### Summary of the Invention

The present invention provides a method and apparatus for dynamically configuring communications devices using a variety of different communications protocols without user intervention. More particularly, in accordance with the invention, the dynamic configuration of a communications device, e.g., a DSL device, is facilitated by a real-time determination as to which link layer protocol is currently deployed across the communications channel. Once an indication of the link layer protocol is received the particular communications device is dynamically and automatically configured with a correct set of protocols. In accordance with a preferred embodiment of the invention, DSL communications are exchanged across a communication channel between a communications service provider and customer premise. In accordance with the preferred embodiment of the invention, a DSL router is employed within the customer premise which incorporates a DSL interface and remote access functions. In accordance with the invention, the DSL interface examines the incoming communications stream from the communications channel, extracts particular packets from the link layer protocol and generates an indication of the identity of the actual link layer protocol being deployed. This indication is used, in conjunction with the remote access functions, to dynamically configure the communications devices with the appropriate communications protocols for exchanging communications across the channel.

Advantageously, in accordance with the invention, communications devices are dynamically configured with variably changing protocols without user intervention.

### Brief Description of the Drawings

FIG. 1 shows a single loop DSL communications system configured in accordance with the principles of the invention;
FIG. 2 shows an expanded view of the DSL router of FIG. 1 configured in accordance with the principles of the invention;
FIG. 3 shows an expanded view of the DSL interface of DSL router of FIG. 2 configured for dynamically configuring communications devices with varying protocols; and
FIG. 4 is a flowchart of illustrative operations performed in accordance with the invention for dynamically configuring communications devices with varying protocols.

Throughout this disclosure, unless otherwise noted, like elements, blocks, components or sections in the figures are denoted by the same reference designations.

### Detailed Description

The present invention provides a method and apparatus for dynamically configuring communications devices using a variety of different communications protocols without user intervention. More particularly, in accordance with the invention, the dynamic configuration of a communications device is facilitated by a real-time determination as to which link layer protocol is currently deployed across the communications channel. Once an indication of the link layer protocol has been received the particular communications device is automatically configured with a correct set of protocols. Advantageously, in accordance with the invention, communications devices are dynamically configured with variably changing protocols without user intervention.

It should be noted that for clarity of explanation, the illustrative embodiments described herein are presented as comprising individual functional blocks or combinations of functional blocks. The functions these blocks represent may be provided through the use of either shared or dedicated hardware, including, but not limited to, hardware capable of executing software. Illustrative embodiments may comprise digital signal processor ("DSP") hardware and/or software performing the operations discussed below. Further, in the claims hereof any element expressed as a means for performing a specified function is intended to encompass any way of performing that function, including, for example, a) a combination of circuit elements which performs that function; or b) software in any form (including, therefore, firmware, object code, microcode or the like) combined with appropriate circuitry for executing that software to perform the function. The invention defined by such claims resides in the fact that the functionalities provided by the various recited means are combined and brought together in the manner which the claims call for. Applicants thus regard any means which can provide those functionalities as equivalent as those shown herein.

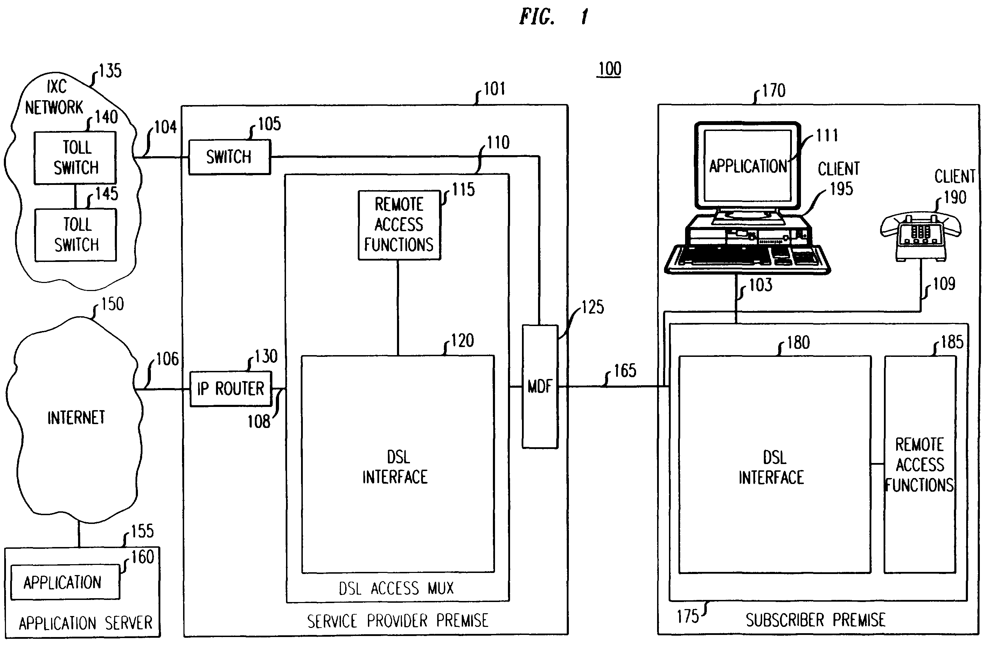

FIG. 1 shows a single loop DSL communications system 100 configured in accordance with the principles of the invention. For clarity of explanation, the illustrative configuration shown in FIG. 1 includes a single communications channel, i.e., communications channel 165, of course, the principles of the invention as described below apply equally to further embodiments which include multiple communications channels. More particularly, subscriber premise 170 comprises client 190 and client 195, i.e., communications devices, which support the execution of particular applications, e.g., application 111. As will be appreciated such applications include browsing the WWW, Internet telephony, video conferencing, and the like. As illustratively shown, client 195 is a personal computer connected to DSL router 175 via a standard Ethernet connection 103, and client 190 is a conventional telephone connected to communications channel 165 via a standard POTS telephone line 109. As will be appreciated, such communications devices can be any information appliance which requires the exchange of information in support of some application. DSL router 175 routes incoming/outgoing communications across communications channel 165, e.g., a local copper loop. DSL router 175 further comprises remote access functions 185 and DSL interface 180. Remote access functions 185 perform (as described in greater detail below) various high level protocol operations, e.g., packet multiplexing and authentication, necessary for establishing and maintaining communications between subscriber premise 170 and service provider premise 101. In accordance with this embodiment of the invention, DSL interface 180 in conjunction with remote access functions 185 facilitate the dynamic configuration of client 195 with varying communications protocols used across communications channel 165. More particularly, in accordance with the invention, the configuration of communications devices within subscriber premise 170 are dynamically adjusted to satisfy varying communications protocol requirements between subscriber premise 170 and service provider premise 101. Further details regarding such dynamic protocol configuration, in accordance with the invention, are discussed below.

As described previously, DSL communications require a DSL communications device, e.g., DSL router 175 and DSL access multiplexer 110, at both ends of the communications channel. Thus, service provider premise 101, e.g., a LEC central office, is configured with DSL interface 120 and remote access functions 115 which form an integral part of DSL access multiplexer 110. As will be appreciated, while DSL interfaces 180 and 120, respectively, are illustratively shown in hardware block diagram form, such DSL interfaces may be implemented in hardware, software, or a combination of hardware/software for delivering the dynamic configuration of the communications devices in accordance with the invention as described herein.

Service provider premise 101 further includes a conventional main distribution frame ("MDF") 125, telecommunications switch 105 and IP router 130. As is well-known, MDF 125 and telecommunications switch 105 are employed by a telecommunications service provider for distributing and completing telecommunications traffic from their subscribers. For example, a subscriber using client 190 places a long distance call which is routed by service provider premise 101, over trunk 104, to inter-exchange carrier network 135 which completes the long distance call using toll switches 140 and 145 to its ultimate destination in a conventional manner.

In addition, IP router 130 is employed by service provider premise 101 for facilitating communications over channels 106 and 108 to public computer networks, e.g., Internet 150. Thus, illustratively, client 195, e.g., a personal computer, may access certain web pages on the WWW using application 111, e.g., a web browser. Web browsers are well-known software application programs (e.g., Netscape® v. 5.0, available from Netscape Communications) which enable a user to traverse the WWW and access the vast amount of information available throughout the WWW. As will be readily understood, the communications stream exchanged in this embodiment is via a conventional Transfer Control Protocol/Internet Protocol ("TCP/IP") connection. As is well-known, TCP/IP is the protocol which is used in describing the way in which information is transferred across the Internet. Essentially, TCP/IP separates information into individual packets and routes these packets between the sending computer, e.g., server, and the receiving computer, e.g., client. TCP/IP and Internet communications are discussed in more detail, e.g., by D. Comer., *Internetworking with TCP/IP*, Third edition, Prentice-Hall, Englewood Cliffs, NJ, 1995. Thus, application 111 receives an input request from the user of client 195 and attempts to locate the information on the WWW by establishing a connection through Internet 150 with the appropriate WWW resource, e.g., application 160, residing on application server 155. As mentioned above, the deployment of a wide number of DSL communications systems having disparate link layer protocols, e.g., PPP, ATM or HDLC, will create certain additional operational issues with regard to the variety of communications devices used to exchange communications across the networks.

In accordance with the preferred embodiment of the invention, ADSL lite (alternatively referred to herein as "splitterless ADSL") is applied across channel 165 to form the single communications channel for the exchange of communications between subscriber premise 170 and service provider premise 101. As will be appreciated, the principles of the invention apply to any DSL-type transmission where the dynamic, i.e., "on-the-fly", configuration of communications devices as a function of varying communications protocols is desired. Typically, in accordance with the preferred embodiment, when channel 165 is so configured as an ADSL lite channel the so-called "high-speed" direction (i.e., "downstream" from service provider premise 101 to subscriber premise 170) data rate bandwidth ranges from 1 Mbits/sec to 2 Mbits/sec, and the so-called "slow-speed" direction (i.e., "upstream" from subscriber premise 170 to service provider premise 101) data rate bandwidth ranges from 64 Kbits/sec to 384 Kbits/sec.

Of course, the particular service provider (e.g., service provider premise 101), various communications networks (e.g., IXC network 135 or Internet 150), and variety of communications devices (e.g., client 190 and client 195) will each impact and require the selection of specific communications protocols for the successful exchange of any communications across channel 165. In accordance with the invention, a dynamic configuration of such communications devices with a varying number of protocols is made without any user intervention. For example, a user of client 195 may be engaging in the downloading of certain files, e.g., files containing large amounts of video content, from application server 155 which due to their large file size require a continuously high downstream bandwidth. Advantageously, in accordance with an embodiment of the invention, DSL interface 180 continually monitors the incoming and outgoing communications traffic across communications channel 165 to and from DSL router 175. In this way, DSL interface 180 can determine the particular communications protocol characteristics communications channel 165, e.g., the traffic in/out of DSL router 175, and initiate dynamic, i.e., real-time, configurations in conjunction with remote access functions 185 of the communications devices within subscriber premise 170 to optimize the overall performance of the channel.

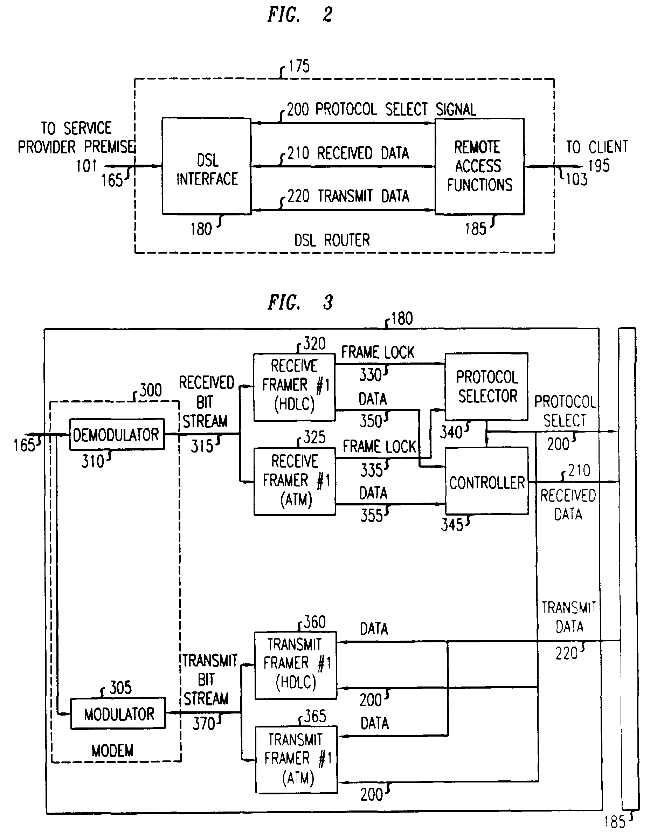

Turning our attention to FIG. 2, an expanded configuration of DSL router 175 is shown and further illustrates the various aspects of the invention. In particular, in accordance with this embodiment of the invention, the real-time observing of the communications protocols used across communications channel 165 by DSL interface 180 (and DSL interface 120 of DSL access multiplexer 110) is accomplished from both a data transmission and data receiving perspective. For example, on the receive side, DSL interface 180 receives the communications transmission from channel 165. DSL interface 180 demodulates, in a well-known manner, the received signals to recover the bit stream, extracts a payload from the framing, and passes the received data 210 to remote access functions 185. Thus, DSL interface 180, in accordance with the invention, executes an auto-configuration process to configure itself to match the particular client. Advantageously, such auto-configuration allows various client devices to be used with multiple DSL systems without the need for specific hardware changes. On the transmit side, DSL interface 180 receives data to be transmitted, e.g., transmit data 220, from remote access functions 185, adds the requisite link layer framing, and modulates the resulting bit stream onto communications channel 165 for transmission. In both receiving and transmitting, remote access functions 185 perform various higher level protocol operations such as packet multiplexing or authentication, and also perform requisite formatting and other protocol operations dictated by the particular communications device, e.g., client 195, connected to DSL router 175.

The exact protocols executed by remote access functions 185 and 115, respectively, are dependent on, at a minimum, the actual link layer protocol being used by the particular DSL communications system, e.g., subscriber premise 170 or service provider premise 101. Thus, the configuration of the various communications devices within the DSL system necessarily depend upon the actual link layer protocol transport mechanism. Significantly, we have determined that if the DSL interface, e.g., DSL interface 180, can recognize the particular protocol currently deployed at the link layer, the remote access functions, e.g., remote access functions 185, can be dynamically, i.e., automatically, configured to execute the correct higher-level protocols deployed above the link layer as are well-known. Thus, in accordance with the invention, a signal is generated by the DSL interface to indicate which link layer protocol is being used and to initiate the dynamic configuration of the remote access functions and therefore all communications devices employing such remote access functions. Illustratively, in accordance with preferred embodiment. protocol select signal 200 is generated by DSL interface 180 and passed to remote access functions 185 to initiate the dynamic protocol configuration in accordance with the principles of the invention.

Turning our attention to FIG. 3, the above-described aspects of DSL interface 180 (and DSL interface 120) and the generation of protocol select signal 200, in accordance with the invention, are discussed in more detail. In accordance with the preferred embodiment of the invention, DSL interface 180 includes modem 300 having modulator 305 and demodulator 310 for modulating and demodulating the data to be transmitted and/or received via communications channel 165 and between two locations, e.g., subscriber premise 170 and service provider premise 101. In accordance with the preferred embodiment of the invention, on the receive side, the communications signal received over channel 165 is demodulated, in a well-known manner, to yield received bit stream 315 having unknown framing. As will be appreciated, framing is a well-known term of art which designates a protocol used to delimit higher-order data elements within a bit stream. For example, framing protocols specify how to find the beginning and end of a particular packet or cell in a bit stream in a transmission stream, e.g., from a modem. As is well-known framing techniques are highly varied and will not be discussed in great detail herein. However, one common framing issue is detecting the alignment of the so-called payload element, i.e., the first bit of a cell. In general, upon detecting the alignment of one payload element, it is often possible to derive the alignment of the balance of the elements in the communication stream, depending on the specifics of the framing format.

In accordance with the preferred embodiment of the invention, received bit stream 315 is passed to multiple framers, e.g., receive framer 320 and receive framer 325. The framers are specific to a particular link layer protocol, e.g., receive framer 320 is an HDLC framer and receive framer 325 is an ATM framer. As such, receive framer 320 and receive framer 325 attempt to lock onto received bit stream 315 by independently searching for their required communications patterns, i.e., bit patterns, within the stream. For example, receive framer 320 will look for an HDLC pattern comprising a particular bit pattern, e.g. 0111111110, the so-called flag byte, followed by a so-called length field, the data payload, a so-called error-detecting code, and another flag byte. Thus, receive framer 320 searches for the flag byte within the bit stream to determine the start of the packet. As will be appreciated, the transmitter has ensured that the flag pattern does not exist anywhere within the bit stream between the flags by using the well-known technique of "bit stuffing".

In contrast, receive framer 325 will look for an ATM pattern comprising an ATM cell which comprises a header and payload. As will be appreciated, ATM cells are typically 53 bytes long with a 5 byte header and 48 byte payload. Typically, ATM framing is accomplished by using some arbitrary bit in the stream as the start of a cell. This start bit, and the next 31 bits are taken to be the first 4 bytes of a cell header. The header check byte, i.e., the fifth byte, is computed across these 32 bits (i.e., start bit + next 31 bits) and compared with bits 33 through 40 as received. If the header check byte matches, this is an indication that the cell boundary has been identified. From this point, a look ahead of 48 bytes forward is applied to define the start of the next cell. However, if upon processing the initial header no match is found, i.e., an error is detected, the phase is slipped by one bit to designate that the start of the cell will now be taken as the bit after the previous arbitrarily selected start bit. As will be appreciated, in such a scheme, the cell alignment, i.e., the correct framing, will be found by slipping no more than 424 bits. That, is, in a conventional ATM cell bit stream, where a cell is 53 bytes in length, there are 424 possible phases where bit "1" of a cell will be found (neglecting any padding of bits or framing between the cells). Thus, the particular framer that is able to achieve a reliable lock on received bit stream 315 asserts its frame lock output signal, e.g., frame lock output signal 330 or frame lock output signal 335, respectively.

In accordance with the preferred embodiment, frame lock output signal 330 or 335 is passed to protocol selector 340 which determines which, if any, of the framers has achieved an acceptable lock. Of course, it is possible for a framer to achieve a "false" lock for some time period due to random patterns in received bit stream 315 that simulate the expected framing pattern. Such a false lock typically fails after a short time interval and therefore does not produce an erroneous result. However, in accordance with the preferred embodiment, protocol selector 340 includes a well-known filtering mechanism to prevent false locks from causing an incorrect determination of the communications protocol. False framing locks are well-known and can be significantly reduced by not declaring a frame lock until multiple frames have been successfully detected and verified. Once protocol selector 340 has received a stable frame lock indication from one, and only one framer, e.g., frame lock output signal 335 of receive framer 325, protocol selector 340 asserts protocol select signal 200 to controller 345.

Controller 345, illustratively a multiplexer in the preferred embodiment, selects data 350 or data 355, respectively, from the locked framer as the data output of DSL interface 180. In the present example, as receive framer 325 is the locked framer, controller 345 will select data 355 which will be passed to remote access functions 185 as received data 210. Further, as discussed above, protocol select signal 200 is also fed to remote access functions 185 to indicate which link layer framing protocol has been, in accordance with the invention, dynamically detected. In this way, remote access functions 210 will use this information to dynamically configure higher level protocols to support fully compatible end-to-end packet transport and connectivity between over communications channel 165.

In accordance with the preferred embodiment of the invention, protocol select signal 200 is also fed to multiple transmit framers, e.g., transmit framer 360 and transmit framer 365, to indicate which one of the framers (as before each framer is particular to a single link layer protocol, e.g., HDLC or ATM) will be used to format transmit bit stream 370, in accordance with the invention, when transmitting data from subscriber premise 170 to service provider premise 101. In particular, once having detected the frame lock from the receiver side as detailed above, in accordance with the preferred embodiment, the correct framing is selected in accordance with the detected frame lock for use on the transmission side. In accordance with the preferred embodiment described above, receive framer 320, receive framer 325, transmit framer 360, and transmit framer 365 are shown, in FIG. 3, as operating in a parallel fashion. In further embodiments of the invention, such framers can be applied to received bit stream 315 or transmit bit stream 320 in a serial fashion. Applying the framers in a sequential way, in accordance with the invention, may be particularly advantageous in applications where a large number of potential framers are applied on a given communications link, or where the framers are implemented in software rather than hardware.

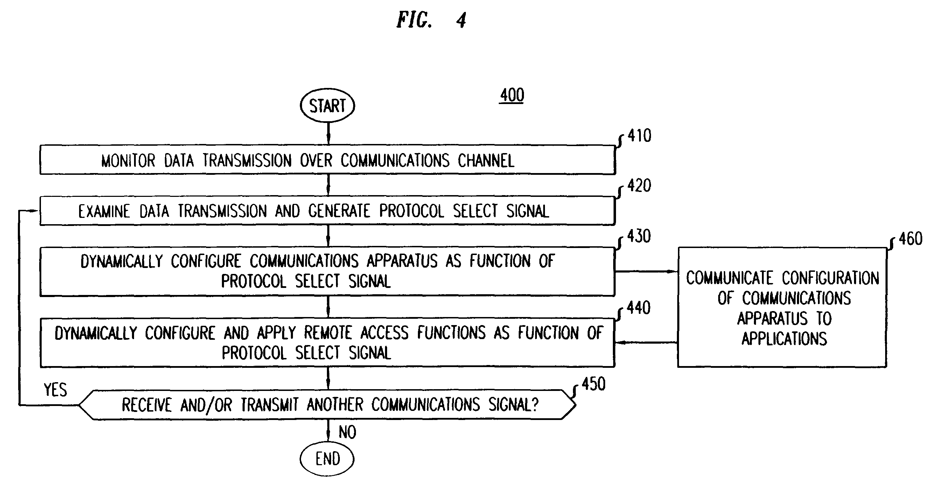

FIG. 4 is a flowchart of illustrative operations 400 performed, in accordance with the invention, for dynamically configuring communications devices with varying communications protocols without user intervention, as described above. More particularly, the data transmission across the communications channel is continually monitored (block 410). The data transmission is examined and the protocol select signal indicative of the particular link layer of the transmission (block 420) is generated, in accordance with the invention as described above. Thereafter, in accordance with the invention, at least one communications apparatus involved in the exchange across the communications channel is dynamically configured with an appropriate communications protocol as a function of the protocol select signal (block 430.) Further, as a function of the protocol select signal, the dynamic configuration and application of remote access functions (block 440) to the communications device occurs. In addition, the actual dynamic configuration of the communications device is communicated to the relevant applications (block 460) so that such applications may, if desirable, configure and optimize their configuration to execute more efficiently with the communications device. As discussed above, such dynamic configuration of the remote access functions facilitates configuration of the communications device with certain requisite higher level protocols to support fully compatible end-to-end packet transport and connectivity between over the communications channel. If additional communications signals are received or transmitted (block 450) the process is repeated to determine if further dynamic configurations of the device, in accordance with the invention, are required due to changing communications protocol deployments. Advantageously, the invention facilitates the dynamic and continual configuration of communications devices with differing protocols without user intervention.

As detailed above, the present invention can be embodied in the form of methods and apparatuses for practicing those methods. The invention can also be embodied in the form of program code embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. The invention can also be embodied in the form of program code, for example, in a storage medium, loaded into and/or executed by a machine, or transmitted over some transmission medium, such as over electrical wiring or cabling, through fiber optics, or via electromagnetic radiation, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

The foregoing merely illustrates the principles of the present invention. Therefore, the invention in its broader aspects is not limited to the specific details shown and described herein.

## Claims

1. A Digital Subscriber Line (DSL) communications method comprising:
monitoring a DSL communications channel, the DSL communications channel carrying a plurality of communications signals, at least one communications signal being associated with a communications exchange between at least two locations;
detecting a communications protocol from the at least one communications signal; and
dynamically configuring at least one communications device employed in the communications exchange as a function of the detected communications protocol.

2. The DSL communications method of claim 1 wherein the detecting the communications protocol operation further comprises:
demodulating the communications signal into a bit stream; and
comparing at least a portion of the bit stream to a plurality of communications signal bit patterns, each communications signal bit pattern being indicative of a particular different one communications protocol of a plurality of communications protocols.

3. The DSL communications method of claim 2 wherein the detected communications protocol is a ATM protocol.

4. The DSL communications method of claim 2 wherein the detecting the communications protocol operation further comprises:
identifying a link layer segment of the communications signal from the bit stream, the detected communications protocol being a function of the link layer segment.

5. A method for dynamically configuring at least one communications device useful for exchanging a communications signal across a DSL communications channel, the method comprising:
monitoring the communications signal being exchanged across the DSL communications channel, the DSL communications channel connecting at least one subscriber premise with at least one telecommunications service provider;
identifying a communications protocol from the communications signal; and
dynamically configuring the communications device as a function of the detected communications protocol during the exchanging of the communications signal.

6. The method of claim 5 further comprising:
changing the communications protocol of the communications signal;
detecting the change in the communications protocol; and
dynamically configuring the communications device employed in the exchanging of the communications signal as a function of the detected change in the communications protocol.

7. The method of claim 5 wherein the identifying the communications protocol operation further comprises:
demodulating the communications signal into a bit stream; and
comparing at least a portion of the bit stream to a plurality of communications signal bit patterns, each communications signal bit pattern being indicative of a particular different one communications protocol of a plurality of communications protocols.

8. The method of claim 7 wherein the identifying the communications protocol operation identifies the communications protocol as a function of a link layer segment of the communications signal.

9. The method of claim 8 wherein the communications protocol is a communications protocol selected from the group consisting of: ATM, HDLC, or PPP.

10. The method of claim 6 wherein the changing the communications protocol is initiated by the telecommunications service provider.

11. The method of claim 7 further comprising transmitting a second communications signal from the communications device using the detected communications protocol.

12. A DSL communications apparatus comprising:
a modem for receiving a DSL signal across a communications channel and demodulating the DSL signal into a received bit stream;
a plurality of framers, the received bit stream serving as input to each framer of the plurality of framers, and each framer attempting a frame lock onto the received bit stream;
a protocol selector for determining a particular one framer of the plurality of framers which has achieved the frame lock onto the received bit stream, and generating a protocol select signal as a function of the frame lock; and
a controller for dynamically configuring the DSL communications apparatus with a communications protocol as a function of the protocol select signal.

13. The DSL communications apparatus of claim 12 wherein the plurality of framers includes a ATM framer and a HDLC framer.

14. The DSL communications apparatus of claim 13 wherein each framer of the plurality of framers is associated with a respective one communications protocol.

15. The DSL communications apparatus of claim 14 wherein the frame lock is determined as a function of the respective one communications protocol of the framer.

16. The DSL communications apparatus of claim 15 wherein the protocol select signal is indicative of the communications protocol.

17. The DSL communications apparatus of claim 15 further comprising a plurality of remote access functions used by the controller in the dynamically configuring the DSL communications apparatus with the communications protocol.

18. The DSL communications apparatus of claim 17 wherein the protocol selector compares at least a portion of the received bit steam to a plurality of communications signal bit patterns, each communications signal bit pattern being indicative of a particular different one communications protocol of a plurality of communications protocols.

19. The DSL communications apparatus of claim 18 wherein the frame lock is a function of the comparison between the portion of the received bit stream to the plurality of communications signal bit patterns.

20. A DSL interface comprising:
means for receiving a DSL signal across a communications channel and means for demodulating the DSL signal into a received bit stream;
means for applying a frame lock onto the received bit stream;
means for determining whether the frame lock onto the received bit stream has occurred, and if so, means for generating a protocol select signal as a function of the frame lock; and
means for dynamically configuring a communications apparatus with a communications protocol as a function of the protocol select signal

21. The DSL interface of claim 20 wherein the means for determining further comprises:
means for comparing at least a portion of the received bit stream to a plurality of communications signal bit patterns, each communications signal bit pattern being indicative of a particular different one communications protocol of a plurality of communications protocols.

22. The DSL interface of claim 21 wherein the means for comparing identifies the communications protocol from the plurality of communications protocols as a function of a link layer segment of the DSL signal.

23. The DSL interface of claim 22 further comprising means for transmitting a second DSL signal from the communications device using the identified communications protocol.

24. The DSL interface of claim 23 wherein the communications channel provides the communications apparatus access to a plurality of communications networks.

25. A machine-readable medium having stored thereon a plurality of instructions, the plurality of instructions including instructions that, when executed by a machine, cause the machine to perform a communications method of dynamically configuring a DSL communications apparatus, the DSL communications apparatus being configured by monitoring a DSL communications channel, the DSL communications channel carrying at least one communications signal associated with a communications exchange between at least two locations, detecting a communications protocol from at least one communications signal of the plurality of communications signals, and dynamically configuring the DSL communications apparatus employed in the communications exchange as a function of the detected communications protocol.

26. The machine-readable medium of claim 25 wherein the detecting the communications protocol operation demodulates the communications signal into a bit stream, and compares at least a portion of the bit stream to a plurality of communications signal bit patterns, each communications signal bit pattern being indicative of a particular different one communications protocol of a plurality of communications protocols.

27. The machine-readable medium of claim 26 wherein the detecting the communications protocol operation identifies a link layer segment of the communications signal from the bit stream, the detected communications protocol being a function of the link layer segment.

28. The machine-readable medium of claim 27 wherein the communications protocol is a communications protocol selected from the group consisting of: ATM, HDLC, or PPP.
